# EUROPEAN PATENT APPLICATION

(11) **EP 4 852 296 A1**
(43) Date of publication of application: **09.12.2026**
(21) Application number: 25748418.8
(22) Date of filing: 08.01.2025
(51) Int. Cl.: H02M 7/48, H02M 7/493, H02P 27/08

(54) **POWER CONVERSION DEVICE**

(30) Priority: 30.01.2024 JP 2024011751
(71) Applicant: DENSO CORPORATION, Kariya-city, Aichi 448-8661 (JP)
(72) Inventor: KONDO, Taizo, Kariya-city, Aichi 448-8661 (JP); NAKASHIMA, Kotaro, Kariya-city, Aichi 448-8661 (JP)
(74) Representative: TBK
(86) International application number: PCT/JP2025/000375
(87) International publication number: WO 2025/164236

(57) **Abstract**

An electric power conversion apparatus includes a rotating electric machine (40) having windings (51U, 51V, 51W), a first inverter (20) having first upper-arm and lower-arm switches (SUHa to SWLa), and a second inverter (30) having second upper-arm and lower-arm switches (SUHb to SWLb). The electric power conversion apparatus further includes a discharge resistor (70, 71) connected in parallel with only one of a first capacitor (15a) and a second capacitor (15b), and a switch unit (QHa, QHb, QLa, QLb, DH, DL, JH, JL) provided in at least one of a positive-electrode-side bus (11) and a negative-electrode-side bus (12). The discharge resistor and the switch unit are provided in such a manner as to allow, when a power supply switch (MH, ML) is in an OFF state, electric current to flow through a closed circuit that includes a specific capacitor and the discharge resistor; the specific capacitor is one of the first and second capacitors which is not connected in parallel with the discharge resistor.

## Description

### [CROSS-REFERENCE TO RELATED APPLICATION]

The present application is based on Japanese Patent Application No. 2024-011751 filed on January 30, 2024, the entire contents of which are incorporated by reference into the present application.

### [TECHNICAL FIELD]

The present disclosure relates to electric power conversion apparatuses.

### [BACKGROUND ART]

Conventionally, electric power conversion apparatuses have been known which control a rotating electric machine by using two inverters. In these electric power conversion apparatuses, a first inverter is electrically connected with first ends of windings of a plurality of phases included in the rotating electric machine; and a second inverter is electrically connected with second ends of the windings. Moreover, the first inverter is electrically connected in parallel with both a DC power source and a first capacitor. On the other hand, the second inverter is electrically connected in parallel with a second capacitor. An example of such a technique is disclosed in Patent Document 1.

### [PRIOR ART LITERATURE]

### [PATENT LITERATURE]

[Patent Document 1]: Japanese Unexamined Patent Application Publication No. JP 2021-125922 A

### [SUMMARY OF THE INVENTION]

In the above-described electric power conversion apparatuses, the supply of electric power from the DC power source to the rotating electric machine is terminated by turning off a power supply switch provided in a path that electrically connects the first inverter and the DC power source. For example, the power supply switch may be turned off in response to a user's instruction. In this case, both the first capacitor and the second capacitor are discharged with the power supply switch placed in an OFF state.

However, the power supply switch may also be turned off when an abnormality has occurred in the electric power conversion apparatus. In this regard, there is a demand for a technique with which it is possible to appropriately realize a configuration that allows both the first capacitor and the second capacitor to be discharged when an abnormality has occurred in the electric power conversion apparatus.

An object of the present disclosure is to provide an electric power conversion apparatus capable of appropriately realizing a configuration that allows both a first capacitor and a second capacitor to be discharged when an abnormality has occurred therein.

According to a first aspect of the present disclosure, there is provided an electric power conversion apparatus comprising:
a rotating electric machine having windings respectively of a plurality of phases;
a first inverter having series connection units respectively of the plurality of phases, each of the series connection units consisting of a first upper-arm switch and a first lower-arm switch that are connected in series with each other, each of the series connection units being connected in parallel with a DC power source and a first capacitor;
a second inverter having series connection units respectively of the plurality of phases, each of the series connection units consisting of a second upper-arm switch and a second lower-arm switch that are connected in series with each other, each of the series connection units being connected in parallel with a second capacitor;
a positive-electrode-side bus connecting, for each of the plurality of phases, a higher-potential-side terminal of the first upper-arm switch of the phase and a higher-potential-side terminal of the second upper-arm switch of the phase;
a negative-electrode-side bus connecting, for each of the plurality of phases, a lower-potential-side terminal of the first lower-arm switch of the phase and a lower-potential-side terminal of the second lower-arm switch of the phase; and
a power supply switch provided in a path connecting the first inverter and the DC power source,
wherein:
   for each of the plurality of phases, both a lower-potential-side terminal of the first upper-arm switch of the phase and a higher-potential-side terminal of the first lower-arm switch of the phase are connected with a first end of the winding of the phase;
   for each of the plurality of phases, both a lower-potential-side terminal of the second upper-arm switch of the phase and a higher-potential-side terminal of the second lower-arm switch of the phase are connected with a second end of the winding of the phase;
   the electric power conversion apparatus further comprises
      a discharge resistor connected in parallel with only one of the first and second capacitors, and
      a switch unit provided in a target bus that is at least one of the positive-electrode-side bus and the negative-electrode-side bus; and
   the discharge resistor and the switch unit are provided in such a manner as to allow, when the power supply switch is in an OFF state, electric current to flow through a closed circuit that includes a specific capacitor and the discharge resistor, the specific capacitor being one of the first and second capacitors which is not connected in parallel with the discharge resistor.

It is conceivable to provide resistors to enable discharge of both the first and second capacitors when an abnormality has occurred in the electric power conversion apparatus and the power supply switch is in an OFF state. In this case, the number of components of the electric power conversion apparatus may be increased by providing both a resistor for discharging the first capacitor and a resistor for discharging the second capacitor in the electric power conversion apparatus. Consequently, it may become impossible to appropriately realize a configuration that allows both the first and second capacitors to be discharged when an abnormality has occurred in the electric power conversion apparatus.

In view of the above, according to the first aspect, the discharge resistor is connected in parallel with only one of the first and second capacitors. Consequently, that one of the first and second capacitors which is connected in parallel with the discharge resistor can be discharged. Moreover, according to the first aspect, the discharge resistor and the switch unit are provided in such a manner as to allow electric current to flow through the closed circuit that includes the specific capacitor and the discharge resistor. Consequently, the specific capacitor can also be discharged; the specific capacitor is that one of the first and second capacitors which is not connected in parallel with the discharge resistor. That is, both the first and second capacitors can be discharged by the single discharge resistor; thus, it becomes possible to suppress increase in the number of components of the electric power conversion apparatus. As a result, it becomes possible to appropriately realize a configuration that allows both the first and second capacitors to be discharged when an abnormality has occurred in the electric power conversion apparatus.

The configuration of "the discharge resistor and the switch unit are provided in such a manner as to allow, when the power supply switch is in an OFF state, electric current to flow through a closed circuit that includes a specific capacitor and the discharge resistor, the specific capacitor being one of the first and second capacitors which is not connected in parallel with the discharge resistor" according to the first aspect can be further implemented according to the following second to fourth aspects.

According to the second aspect, in the electric power conversion apparatus according to the first aspect:
the discharge resistor is connected in parallel with, of the first and second capacitors, only the first capacitor;
the switch unit includes a changeover switch and a diode that is connected in parallel with the changeover switch; and
an anode and a cathode of the diode are oriented in such a manner as to allow discharge current of the second capacitor to flow through the discharge resistor.

According to the above-described second aspect, the discharge current of the second capacitor can be conducted through the diode, thereby allowing electric current to flow through a closed circuit that includes the second capacitor and the discharge resistor. As a result, both the first and second capacitors can be discharged by the single discharge resistor.

According to the third aspect, in the electric power conversion apparatus according to the first aspect, the switch unit includes a normally-off changeover switch and a normally-on parallel switch that is connected in parallel with the normally-off changeover switch.

According to the above-described third aspect, the discharge current of the specific capacitor can be conducted through the parallel switch, thereby allowing electric current to flow through the closed circuit that includes the specific capacitor and the discharge resistor. As a result, both the first and second capacitors can be discharged by the single discharge resistor.

According to the fourth aspect, in the electric power conversion apparatus according to the first aspect, the switch unit includes a normally-on switch.

According to the above-described fourth aspect, the discharge current of the specific capacitor can be conducted through the normally-on switch, thereby allowing electric current to flow through the closed circuit that includes the specific capacitor and the discharge resistor. As a result, both the first and second capacitors can be discharged by the single discharge resistor.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is an overall configuration diagram of an electric power conversion system according to a first embodiment;
FIG. 2 is a functional block diagram of processes executed by a control apparatus according to the first embodiment;
FIG. 3 is a diagram illustrating the control mode of H drive control;
FIG. 4 is a diagram illustrating the control mode of Y drive control;
FIG. 5 is a flowchart illustrating steps of a process executed by the control apparatus;
FIG. 6 is a time chart illustrating an example of the operation of the electric power conversion system according to the first embodiment;
FIG. 7 is an overall configuration diagram of an electric power conversion system according to a second embodiment;
FIG. 8 is a time chart illustrating an example of the operation of the electric power conversion system according to the second embodiment;
FIG. 9 is an overall configuration diagram of an electric power conversion system according to a third embodiment;
FIG. 10 is a functional block diagram of processes executed by a control apparatus according to the third embodiment; and
FIG. 11 is a time chart illustrating an example of the operation of the electric power conversion system according to the third embodiment.

### [EMBODIMENTS FOR CARRYING OUT THE INVENTION]

Embodiments will now be described with reference to the drawings. It should be noted that in the embodiments, functionally and/or structurally corresponding and/or associated parts will be designated by the same reference signs or by reference signs differing in the hundreds and higher digits as appropriate. Moreover, it also should be noted that for corresponding and/or associated parts in one embodiment, reference may be made to the explanation thereof in the other embodiments.

### [First Embodiment]

Hereinafter, a first embodiment embodying an electric power conversion apparatus according to the present disclosure will be described with reference to the drawings. In the present embodiment, the electric power conversion apparatus is installed in an electrified vehicle such as an electric vehicle or a hybrid vehicle, and constitutes an in-vehicle electric power conversion system.

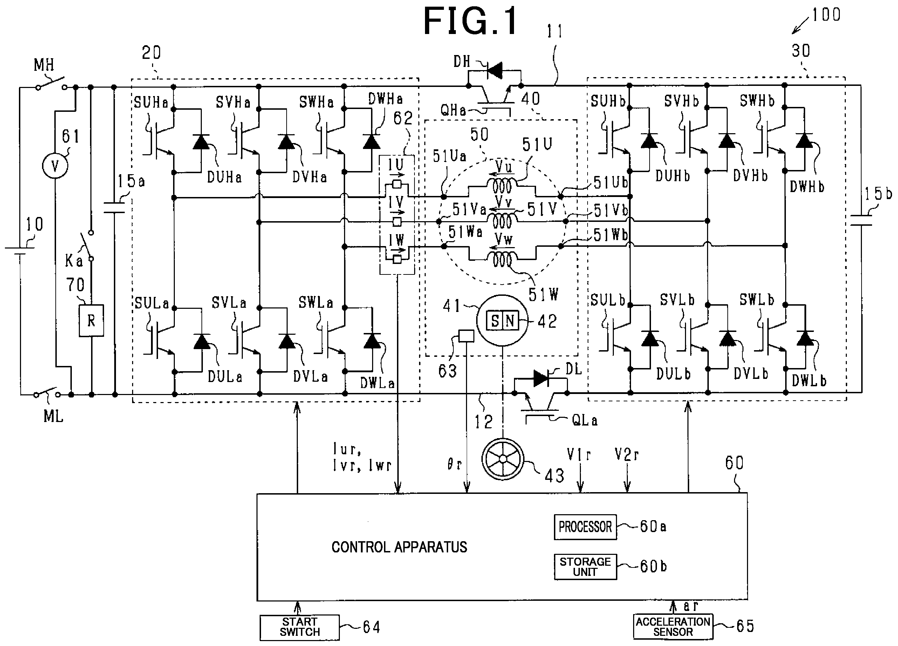

As shown in FIG. 1, the electric power conversion system 100 includes a battery 10 (corresponding to a "DC power source"), a first inverter 20, a second inverter 30 and a rotating electric machine 40. The battery 10 may be implemented by, for example, an assembled battery that includes unit batteries connected in series with each other. Moreover, each unit battery may be implemented by, for example, a single battery cell or a plurality of battery cells connected in series with each other. Furthermore, each battery cell may be implemented by, for example, a secondary battery cell such as a lithium-ion battery cell.

Each of the first inverter 20 and the second inverter 30 includes an electric power conversion circuit that is configured to convert DC power supplied from the battery 10 into three-phase AC power and supply the three-phase AC power to the rotating electric machine 40.

The first inverter 20 includes: a U-phase series connection unit consisting of a U-phase first upper-arm switch SUHa and a U-phase first lower-arm switch SULa that are connected in series with each other; a V-phase series connection unit consisting of a V-phase first upper-arm switch SVHa and a V-phase first lower-arm switch SVLa that are connected in series with each other; and a W-phase series connection unit consisting of a W-phase first upper-arm switch SWHa and a W-phase first lower-arm switch SWLa that are connected in series with each other. Similarly, the second inverter 30 includes: a U-phase series connection unit consisting of a U-phase second upper-arm switch SUHb and a U-phase second lower-arm switch SULb that are connected in series with each other; a V-phase series connection unit consisting of a V-phase second upper-arm switch SVHb and a V-phase second lower-arm switch SVLb that are connected in series with each other; and a W-phase series connection unit consisting of a W-phase second upper-arm switch SWHb and a W-phase second lower-arm switch SWLb that are connected in series with each other.

In the present embodiment, each of the switches SUHa to SWLa and SUHb to SWLb is implemented by a voltage-controlled semiconductor switching element, more particularly by an IGBT. In this case, each of the switches SUHa to SWLa and SUHb to SWLb has its collector serving as a higher-potential-side terminal and its emitter serving as a lower-potential-side terminal. Moreover, freewheeling diodes DUHa, DVHa, DWHa, DULa, DVLa, DWLa, DUHb, DVHb, DWHb, DULb, DVLb and DWLb are connected respectively in antiparallel to the switches SUHa, SVHa, SWHa, SULa, SVLa, SWLa, SUHb, SVHb, SWHb, SULb, SVLb and SWLb.

The collectors of the first upper-arm switches SUHa, SVHa and SWHa of the respective phases and the collectors of the second upper-arm switches SUHb, SVHb and SWHb of the respective phases are electrically connected with each other via a positive-electrode-side bus 11 such as a busbar. On the other hand, the emitters of the first lower-arm switches SULa, SVLa and SWLa of the respective phases and the emitters of the second lower-arm switches SULb, SVLb and SWLb of the respective phases are electrically connected with each other via a negative-electrode-side bus 12 such as a busbar.

A positive electrode terminal of the battery 10 is electrically connected with the positive-electrode-side bus 11 on the opposite side of connection points of the positive-electrode-side bus 11 with the first upper-arm switches SUHa, SVHa and SWHa of the respective phases to connection points of the positive-electrode-side bus 11 with the second upper-arm switches SUHb, SVHb and SWHb of the respective phases. On the other hand, a negative electrode terminal of the battery 10 is electrically connected with the negative-electrode-side bus 12 on the opposite side of connection points of the negative-electrode-side bus 12 with the first lower-arm switches SULa, SVLa and SWLa of the respective phases to connection points of the negative-electrode-side bus 12 with the second lower-arm switches SULb, SVLb and SWLb of the respective phases.

The rotating electric machine 40 is an in-vehicle main machine. The rotating electric machine 40 includes a rotor 41 that is configured so that mechanical power can be transmitted between it and drive wheels 43 of the vehicle. In the present embodiment, the rotating electric machine 40 is configured as a permanent-magnet field synchronous machine. The rotor 41 includes permanent magnets 42 (e.g., neodymium magnets) as field poles.

The rotating electric machine 40 also includes a stator 50. The stator 50 includes, as armature windings, a U-phase winding 51U, a V-phase winding 51V and a W-phase winding 51W. The U-phase, V-phase and W-phase windings 51U, 51V and 51W are arranged so as to be offset from each other by 120° in electrical angle. In addition, each of the U-phase, V-phase and W-phase windings 51U, 51V and 51W is an open winding. That is, each of the U-phase, V-phase and W-phase windings 51U, 51V and 51W has two ends thereof electrically connected respectively to the first inverter 20 and the second inverter 30.

Specifically, a first end 51Ua of the U-phase winding 51U is electrically connected with both the emitter of the U-phase first upper-arm switch SUHa and the collector of the U-phase first lower-arm switch SULa; a first end 51Va of the V-phase winding 51V is electrically connected with both the emitter of the V-phase first upper-arm switch SVHa and the collector of the V-phase first lower-arm switch SVLa; and a first end 51Wa of the W-phase winding 51W is electrically connected with both the emitter of the W-phase first upper-arm switch SWHa and the collector of the W-phase first lower-arm switch SWLa. On the other hand, a second end 51Ub of the U-phase winding 51U is electrically connected with both the emitter of the U-phase second upper-arm switch SUHb and the collector of the U-phase second lower-arm switch SULb; a second end 51Vb of the V-phase winding 51V is electrically connected with both the emitter of the V-phase second upper-arm switch SVHb and the collector of the V-phase second lower-arm switch SVLb; and a second end 51Wb of the W-phase winding 51W is electrically connected with both the emitter of the W-phase second upper-arm switch SWHb and the collector of the W-phase second lower-arm switch SWLb.

The electric power conversion system 100 further includes a positive-electrode-side changeover switch QHa and a negative-electrode-side changeover switch QLa. The positive-electrode-side changeover switch QHa is provided, in the positive-electrode-side bus 11 (corresponding to a "target bus"), between the first inverter 20 and the second inverter 30. Specifically, the positive-electrode-side changeover switch QHa is provided between the connection points of the positive-electrode-side bus 11 with the first upper-arm switches SUHa, SVHa and SWHa of the respective phases and the connection points of the positive-electrode-side bus 11 with the second upper-arm switches SUHb, SVHb and SWHb of the respective phases. The positive-electrode-side changeover switch QHa electrically connects between the first inverter 20 and the second inverter 30 in the positive-electrode-side bus 11 when turned on, and breaks the electrical connection between the first inverter 20 and the second inverter 30 in the positive-electrode-side bus 11 when turned off.

On the other hand, the negative-electrode-side changeover switch QLa is provided, in the negative-electrode-side bus 12 (corresponding to a "target bus"), between the first inverter 20 and the second inverter 30. Specifically, the negative-electrode-side changeover switch QLa is provided between the connection points of the negative-electrode-side bus 12 with the first lower-arm switches SULa, SVLa and SWLa of the respective phases and the connection points of the negative-electrode-side bus 12 with the second lower-arm switches SULb, SVLb and SWLb of the respective phases. The negative-electrode-side changeover switch QLa electrically connects between the first inverter 20 and the second inverter 30 in the negative-electrode-side bus 12 when turned on, and breaks the electrical connection between the first inverter 20 and the second inverter 30 in the negative-electrode-side bus 12 when turned off.

In the present embodiment, both the positive-electrode-side changeover switch QHa and the negative-electrode-side changeover switch QLa are controlled by a control apparatus 60 that is included in the electric power conversion system 100. As will be described later, both the positive-electrode-side changeover switch QHa and the negative-electrode-side changeover switch QLa are provided for switching the drive state of the electric power conversion system 100.

The electric power conversion system 100 also includes a first capacitor 15a and a second capacitor 15b. Each of the first and second capacitors 15a and 15b functions as a smoothing capacitor. In addition, each of the first and second capacitors 15a and 15b may be implemented by, for example, an electric double-layer capacitor or an electrolytic capacitor.

A first end of the first capacitor 15a is electrically connected with the positive-electrode-side bus 11 at a location between the connection points of the positive-electrode-side bus 11 with the first upper-arm switches SUHa, SVHa and SWHa of the respective phases and the positive electrode terminal of the battery 10. On the other hand, a second end of the first capacitor 15a is electrically connected with the negative-electrode-side bus 12 at a location between the connection points of the negative-electrode-side bus 12 with the first lower-arm switches SULa, SVLa and SWLa of the respective phases and the negative electrode terminal of the battery 10. That is, the first capacitor 15a is electrically connected in parallel with the series connection units of the first upper-arm switches SUHa, SVHa and SWHa of the respective phases and the first lower-arm switches SULa, SVLa and SWLa of the respective phases.

A first end of the second capacitor 15b is electrically connected with the positive-electrode-side bus 11 on the opposite side of the connection points of the positive-electrode-side bus 11 with the second upper-arm switches SUHb, SVHb and SWHb of the respective phases to the connection points of the positive-electrode-side bus 11 with the first upper-arm switches SUHa, SVHa and SWHa of the respective phases. On the other hand, a second end of the second capacitor 15b is electrically connected with the negative-electrode-side bus 12 on the opposite side of the connection points of the negative-electrode-side bus 12 with the second lower-arm switches SULb, SVLb and SWLb of the respective phases to the connection points of the negative-electrode-side bus 12 with the first lower-arm switches SULa, SVLa and SWLa of the respective phases. That is, the second capacitor 15b is electrically connected in parallel with the series connection units of the second upper-arm switches SUHb, SVHb and SWHb of the respective phases and the second lower-arm switches SULb, SVLb and SWLb of the respective phases.

The electric power conversion system 100 further includes a positive-electrode-side power supply switch MH and a negative-electrode-side power supply switch ML. The positive-electrode-side power supply switch MH is provided, in the positive-electrode-side bus 11, between a connection point of the positive-electrode-side bus 11 with the first end of the first capacitor 15a and the positive electrode terminal of the battery 10. On the other hand, the negative-electrode-side power supply switch ML is provided, in the negative-electrode-side bus 12, between a connection point of the negative-electrode-side bus 12 with the second end of the first capacitor 15a and the negative electrode terminal of the battery 10. Moreover, each of the power supply switches MH and ML is a normally-off switch, and may be implemented by, for example, a relay or a semiconductor switching element. In addition, each of the power supply switches MH and ML is controlled by the control apparatus 60.

The electric power conversion system 100 also includes a voltage sensor 61, a current sensor 62, a rotation angle sensor 63, a start switch 64 and an acceleration sensor 65. The voltage sensor 61 detects the voltage of the first capacitor 15a. The current sensor 62 detects phase currents flowing respectively through the U-phase, V-phase and W-phase windings 51U, 51V and 51W. In the present embodiment, the current sensor 62 is provided on the first inverter 20 side of each of the U-phase, V-phase and W-phase windings 51U, 51V and 51W. It should be noted that the current sensor 62 may alternatively be provided on the second inverter 30 side of each of the U-phase, V-phase and W-phase windings 51U, 51V and 51W. The rotation angle sensor 63, which may be implemented by, for example, a resolver, detects the electrical angle of the rotor 41. Detection values of the sensors 61 to 63 are inputted to the control apparatus 60.

The start switch 64, which may be, for example, an ignition switch or a push-button start switch, is operated by a user of the vehicle. The acceleration sensor 65 detects the acceleration ar of the vehicle. A signal, which indicates that the start switch 64 has been turned on or off, and a detection value of the acceleration sensor 65 are inputted to the control apparatus 60.

The control apparatus 60 is implemented by an ECU (Electronic Control Unit) that performs various controls of the electric power conversion system 100. The control apparatus 60 includes, as hardware, a processor 60a and a storage unit 60b. In addition, in the electric power conversion system 100, each in-vehicle device may be controlled by an ECU corresponding to the in-vehicle device. However, in FIG. 1, for the sake of convenience, a plurality of ECUs are shown as a single control apparatus 60.

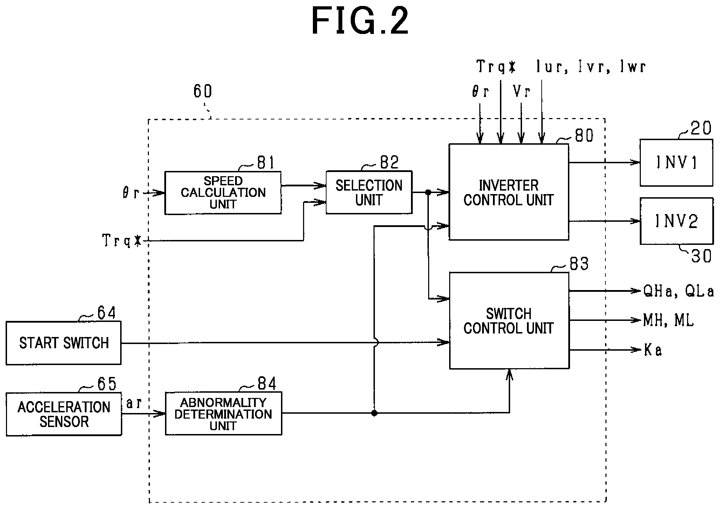

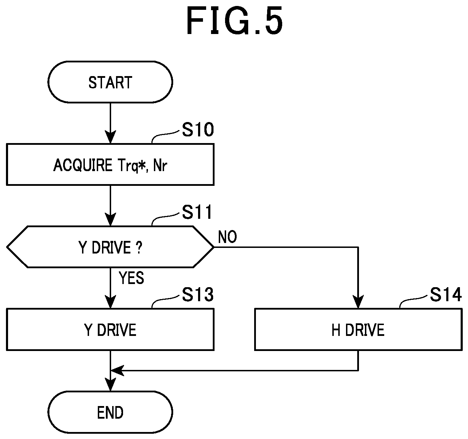

The storage unit 60b includes, as hardware, a memory and a storage. The memory is a storage device for storing data used for processes of the control apparatus 60. The memory provides the processor 60a with a workspace for temporary use when the processor 60a performs the processes. The memory may include, for example, a ROM or a RAM. The storage is a storage device that stores various programs and data to be read and executed by the processor 60a. The storage is also a non-transitory tangible storage medium. The storage may include, for example, an HDD or a flash memory. The storage stores program information for the processes shown in FIGS. 2 and 5 which will be described later.

For example, program information stored in a non-transitory tangible storage medium may be installed in the storage unit 60b. The storage medium may be, for example, a USB memory, a CD-ROM or a DVD. Moreover, for example, program information, which is transmitted by OTA (Over The Air) via a communication network, may also be installed in the storage unit 60b.

As shown in FIG. 2, the control apparatus 60 includes an inverter control unit 80, a speed calculation unit 81, a selection unit 82 and a switch control unit 83. To the switch control unit 83, there is inputted the signal indicating that the start switch 64 has been turned on or off. When the inputted signal indicates that the start switch 64 has been turned on, the switch control unit 83 turns on both the power supply switches MH and ML. In contrast, when the inputted signal indicates that the start switch 64 has been turned off, the switch control unit 83 turns off both the power supply switches MH and ML.

In order to control a controlled variable of the rotating electric machine 40 to a command value, the inverter control unit 80 controls the ON/OFF states of the switches SUHa to SWLa of the first inverter 20 and the switches SUHb to SWLb of the second inverter 30 with both the power supply switches MH and ML turned on. In the present embodiment, the controlled variable is torque.

Specifically, to the inverter control unit 80, there are inputted the voltage Vr detected by the voltage sensor 61, the phase currents Iur, Ivr and Iwr detected by the current sensor 62, and the electrical angle θr detected by the rotation angle sensor 63. In order to control the torque of the rotating electric machine 40 to a torque command value Trq* received from a control apparatus superordinate to the control apparatus 60, the inverter control unit 80 generates drive signals for the switches SUHa to SWLa and SUHb to SWLb of the first and second inverters 20 and 30 based on the voltage Vr, the phase currents Iur, Ivr and Iwr and the electrical angle θr. The drive signals include ON commands and OFF commands for the switches.

The speed calculation unit 81 calculates, based on the electrical angle θr detected by the rotation angle sensor 63, the rotational speed Nr of the rotor 41.

The selection unit 82 determines whether to operate the electric power conversion system 100 under Y drive control or H drive control. In the present embodiment, the selection unit 82 selects either the Y drive control or the H drive control based on the operating point of the rotating electric machine 40, which is determined by the calculated rotational speed Nr and the torque command value Trq*, and control map information. The control map information is information in which regions of the Y drive control and the H drive control are defined in association with the rotational speed Nr and the torque command value Trq*. The control map information is stored in the storage unit 60b.

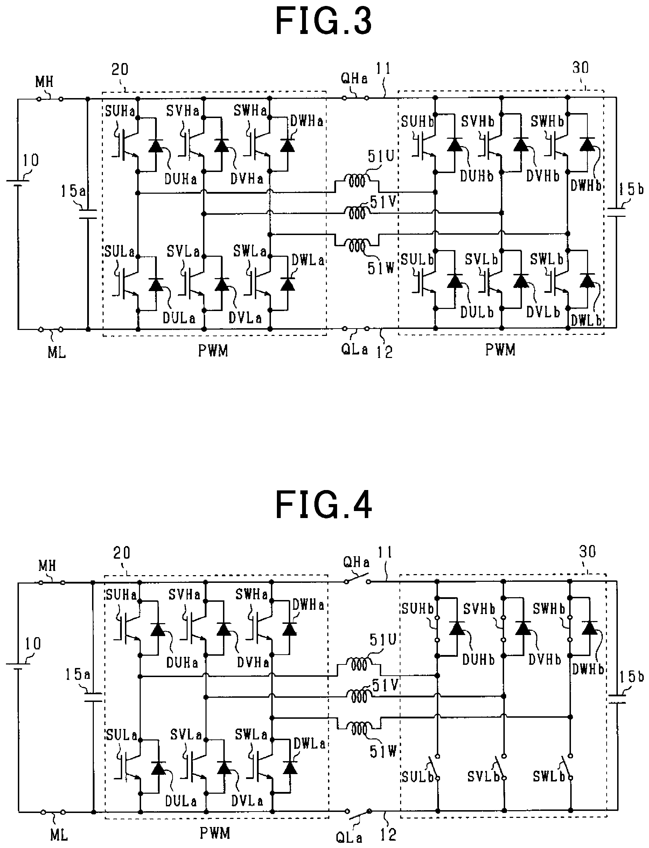

When the H drive control is selected by the selection unit 82, as the H drive control, the switch control unit 83 turns on both the changeover switches QHa and QLa as shown in FIG. 3. Moreover, when the H drive control is selected by the selection unit 82, as the H drive control, the inverter control unit 80 performs control of PWM-driving the switches SUHb to SWLb of the second inverter 30 while PWM-driving the switches SUHa to SWLa of the first inverter 20.

On the other hand, when the Y drive control is selected by the selection unit 82, as the Y drive control, the switch control unit 83 turns off both the changeover switches QHa and QLa as shown in FIG. 4. Moreover, when the Y drive control is selected by the selection unit 82, the inverter control unit 80 performs control of PWM-driving the switches SUHa to SWLa of the first inverter 20. At the same time, the inverter control unit 80 keeps the second lower-arm switches SULb, SVLb and SWLb of the respective phases in an OFF state while keeping the second upper-arm switches SUHb, SVHb and SWHb of the respective phases in an ON state. Consequently, the U-phase, V-phase and W-phase windings 51U, 51V and 51W are star-connected via the second inverter 30.

Alternatively, the Y drive control may be executed as follows. With both the changeover switches QHa and QLa turned off, the inverter control unit 80 may keep the second lower-arm switches SULb, SVLb and SWLb of the respective phases in an ON state while keeping the second upper-arm switches SUHb, SVHb and SWHb of the respective phases in an OFF state. Moreover, when the Y drive control is selected by the selection unit 82, the switch control unit 83 may turn off, of the changeover switches QHa and QLa, only the positive-electrode-side changeover switch QHa. In this case, the inverter control unit 80 may keep the second lower-arm switches SULb, SVLb and SWLb of the respective phases in an OFF state while keeping the second upper-arm switches SUHb, SVHb and SWHb of the respective phases in an ON state. Otherwise, when the Y drive control is selected by the selection unit 82, the switch control unit 83 may turn off, of the changeover switches QHa and QLa, only the negative-electrode-side changeover switch QLa. In this case, the inverter control unit 80 may keep the second lower-arm switches SULb, SVLb and SWLb of the respective phases in an ON state while keeping the second upper-arm switches SUHb, SVHb and SWHb of the respective phases in an OFF state.

The inverter control unit 80 controls charge/discharge currents of the gates of the switches SUHa to SWLa and SUHb to SWLb of the first and second inverters 20 and 30 based on the generated drive signals. Consequently, the ON/OFF states of the switches SUHa to SWLa and SUHb to SWLb of the first and second inverters 20 and 30 are controlled in accordance with the drive signals.

FIG. 5 shows a flowchart of a control process executed by the control apparatus 60 for the rotating electric machine 40. In addition, the process shown in FIG. 5 is repeatedly executed by the processor 60a of the control apparatus 60 at a predetermined control cycle.

In step S10, the selection unit 82 acquires the torque command value Trq* and the rotational speed Nr calculated by the speed calculation unit 81.

In step S11, the selection unit 82 selects, based on the torque command value Trq* and the rotational speed Nr, either the Y drive control or the H drive control.

If the Y drive control is selected in step S11, the process proceeds to step S13. In step S13, the inverter control unit 80 and the switch control unit 83 execute the Y drive control shown in FIG. 4. On the other hand, if the H drive control is selected in step S11, the process proceeds to step S14. In step S14, the inverter control unit 80 and the switch control unit 83 execute the H drive control shown in FIG. 3.

When an abnormality has occurred in the electric power conversion system 100, the power supply switches MH and ML may be turned off and the capacitors 15a and 15b may be discharged.

Specifically, as shown in FIG. 2, the control apparatus 60 includes an abnormality determination unit 84. The abnormality determination unit 84 determines whether an abnormality has occurred in the electric power conversion system 100. When it is determined by the abnormality determination unit 84 that an abnormality has occurred in the electric power conversion system 100, the switch control unit 83 turns off both the power supply switches MH and ML. In this case, for example, with both the power supply switches MH and ML turned off, the inverter control unit 80 may perform switching control of the switches SUHa to SWLa and SUHb to SWLb of the first and second inverters 20 and 30 so that d-axis current flows through the U-phase, V-phase and W-phase windings 51U, 51V and 51W, thereby discharging the capacitors 15a and 15b.

In the present embodiment, the acceleration ar of the vehicle detected by the acceleration sensor 65 is inputted to the abnormality determination unit 84. As the determination as to whether an abnormality has occurred in the electric power conversion system 100, the abnormality determination unit 84 determines, based on the inputted acceleration ar, whether a collision of the vehicle has occurred.

However, as an abnormality of the electric power conversion system 100, a failure may occur in at least one of the control apparatus 60, the first inverter 20 and the second inverter 30. When a failure has occurred in at least one of the first and second inverters 20 and 30, the switching control for discharging the capacitors 15a and 15b may become not executable. Moreover, when the abnormality determination unit 84 has lost the abnormality determination function thereof and/or the inverter control unit 80 has lost the switching control function thereof in the control apparatus 60, it may become impossible to discharge the capacitors 15a and 15b.

In this regard, it is conceivable to provide resistors to enable discharge of the first capacitor 15a and the second capacitor 15b when an abnormality has occurred in the electric power conversion system 100 and the power supply switches MH and ML are in an OFF state. In this case, in a comparative example different from the present embodiment, with a resistor provided for discharging the first capacitor 15a and a resistor provided for discharging the second capacitor 15b, the number of components of the electric power conversion system 100 may be increased. Therefore, there is a demand for a technique with which it is possible to appropriately realize a configuration that allows both the first capacitor 15a and the second capacitor 15b to be discharged when an abnormality has occurred in the electric power conversion system 100.

In view of the above, in the present embodiment, the electric power conversion system 100 includes the following configuration in order to enable discharge of the first capacitor 15a and the second capacitor 15b when an abnormality has occurred therein.

The electric power conversion system 100 includes a discharge resistor 70, which is a passive element, and a series switch Ka. As the discharge resistor 70, a resistor having a resistance value determined based on a voltage (e.g., a rated voltage) of the battery 10 and the capacitances of the capacitors 15a and 15b is employed.

The discharge resistor 70 is electrically connected in parallel with, of the first capacitor 15a and the second capacitor 15b, only the first capacitor 15a. Specifically, a first end of the discharge resistor 70 is electrically connected to the positive-electrode-side bus 11 at a location between a connection point of the positive-electrode-side bus 11 with the first end of the first capacitor 15a and the positive-electrode-side power supply switch MH. A second end of the discharge resistor 70 is electrically connected to the negative-electrode-side bus 12 at a location between a connection point of the negative-electrode-side bus 12 with the second end of the first capacitor 15a and the negative-electrode-side power supply switch ML.

The series switch Ka is connected, on a higher-potential side of the discharge resistor 70, in series with the discharge resistor 70. Specifically, the first end of the discharge resistor 70 is electrically connected with the series switch Ka. The series switch Ka is electrically connected with the positive-electrode-side bus 11 at the location between the connection point of the positive-electrode-side bus 11 with the first end of the first capacitor 15a and the positive-electrode-side power supply switch MH. The series switch Ka is a normally-on switch. The series switch Ka may be implemented by, for example, a normally-closed mechanical relay or a semiconductor switching element such as a depletion-type N-channel MOSFET. In addition, the series switch Ka is controlled by the switch control unit 83.

When it is determined that no abnormality has occurred in the electric power conversion system 100, the switch control unit 83 turns off the series switch Ka. Consequently, electric current is prevented from flowing through the discharge resistor 70 during the drive of the rotating electric machine 40. On the other hand, when it is determined that an abnormality has occurred in the electric power conversion system 100, the switch control unit 83 turns on the series switch Ka.

In the present embodiment, when the series switch Ka is in an ON state and both the power supply switches MH and ML are in an OFF state, electric current is allowed to flow through a closed circuit that includes the second capacitor 15b and the discharge resistor 70.

Specifically, in the present embodiment, normally-off semiconductor switching elements, more particularly IGBTs are employed as the changeover switches QHa and QLa. In this case, freewheeling diodes DH and DL are connected respectively in parallel with the changeover switches QHa and QLa. The diode DH connected in parallel with the positive-electrode-side changeover switch QHa has its anode electrically connected with the emitter of the positive-electrode-side changeover switch QHa, and has its cathode electrically connected with the collector of the positive-electrode-side changeover switch QHa. On the other hand, the diode DL connected in parallel with the negative-electrode-side changeover switch QLa has its anode electrically connected with the emitter of the negative-electrode-side changeover switch QLa, and has its cathode electrically connected with the collector of the negative-electrode-side changeover switch QLa. Consequently, the anodes and cathodes of the diodes DH and DL are oriented in such a manner as to allow discharge current of the second capacitor 15b to flow through the discharge resistor 70.

In the present embodiment, the changeover switches QHa and QLa and the diodes DH and DL together correspond to a "switch unit". Moreover, the buses 11 and 12, the first inverter 20, the second inverter 30, the rotating electric machine 40, the discharge resistor 70, the power supply switches MH and ML, the changeover switches QHa and QLa and the diodes DH and DL together constitute an "electric power conversion apparatus".

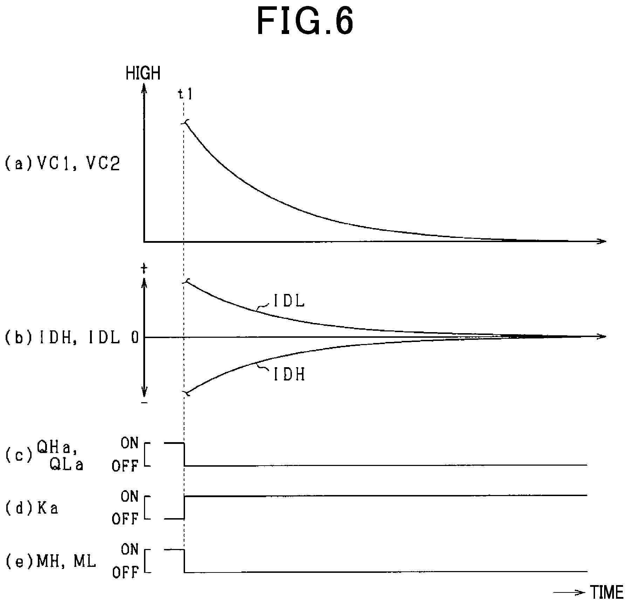

Next, with reference to FIG. 6, explanation will be given of operation of the electric power conversion system 100 when an abnormality has occurred therein. In this explanation, it is assumed that a collision of the vehicle occurs at a time instant t1 and thus the drive signals for the switches SUHa to SWLa and SUHb to SWLb that are controlled by the inverter control unit 80 and the control signals for the switches MH, ML, QHa, QLa and Ka that are controlled by the switch control unit 83 become unavailable.

In FIG. 6, (a) illustrates the temporal changes of the voltages VC1 and VC2 of the capacitors 15a and 15b; (b) illustrates the temporal changes of the electric currents IDH and IDL flowing respectively through the diodes DH and DL that are connected respectively in parallel with the changeover switches QHa and QLa; (c) illustrates the ON/OFF states of the changeover switches QHa and QLa; (d) illustrates the ON/OFF state of the series switch Ka; and (e) illustrates the ON/OFF states of the power supply switches MH and ML. It should be noted that the signs of the electric currents IDH and IDL flowing respectively through the diodes DH and DL are defined, in the buses 11 and 12, to be positive when they flow from the first inverter 20 to the second inverter 30 and to be negative when they flow from the second inverter 30 to the first inverter 20.

Before the time instant t1, the selection unit 82 selects the H drive control. In this case, the switch control unit 83 keeps the power supply switches MH and ML and the changeover switches QHa and QLa in an ON state while keeping the series switch Ka in an OFF state. At the same time, the inverter control unit 80 performs the switching control of the switches SUHa to SWLa and SUHb to SWLb of the first and second inverters 20 and 30.

From the time instant t1 onward, the drive signals from the inverter control unit 80 become unavailable and thus the switches SUHa to SWLa and SUHb to SWLb are placed in an OFF state. Moreover, the control signals from the switch control unit 83 also become unavailable and thus the normally-off power supply switches MH and ML and the normally-off changeover switches QHa and QLa are placed in an OFF state. On the other hand, the normally-on series switch Ka is placed in an ON state. In this case, electric current flows through a closed circuit that includes the first capacitor 15a, the buses 11 and 12 and the discharge resistor 70. Consequently, the voltage VC1 of the first capacitor 15a is gradually lowered. Moreover, the discharge current of the second capacitor 15b is conducted through the diodes DH and DL; thus, electric current flows through a closed circuit that includes the second capacitor 15b, the buses 11 and 12, the diodes DH and DL and the discharge resistor 70. Consequently, the voltage VC2 of the second capacitor 15b is also gradually lowered. In addition, in the present embodiment, the second capacitor 15b corresponds to a "specific capacitor".

In the present embodiment, when an abnormality has occurred in the electric power conversion system 100, both the first capacitor 15a and the second capacitor 15b can be discharged by the single discharge resistor 70. Consequently, it becomes possible to suppress increase in the number of components of the electric power conversion system 100 as compared with a comparative example in which resistors are provided respectively corresponding to the capacitors 15a and 15b. As a result, it becomes possible to appropriately realize a configuration that allows both the first capacitor 15a and the second capacitor 15b to be discharged when an abnormality has occurred in the electric power conversion system 100.

In the electric power conversion system 100, there is provided the series switch Ka that is electrically connected in series with the discharge resistor 70. Consequently, when the power supply switches MH and ML are in ON state, electric current is prevented, by turning off the series switch Ka, from flowing through the discharge resistor 70. As a result, it becomes possible to suppress increase in electric power loss occurring in the electric power conversion system 100 during the drive of the rotating electric machine 40.

In the present embodiment, a normally-on switch is employed as the series switch Ka. Consequently, it becomes possible to reliably turn on the series switch Ka even when an abnormality has occurred in the electric power conversion system 100 and thus the control signal sent from the control apparatus 60 to the series switch Ka becomes unavailable. As a result, it becomes possible to realize a configuration suitable for discharging both the first and second capacitors 15a and 15b when an abnormality has occurred in the electric power conversion system 100.

### [Second Embodiment]

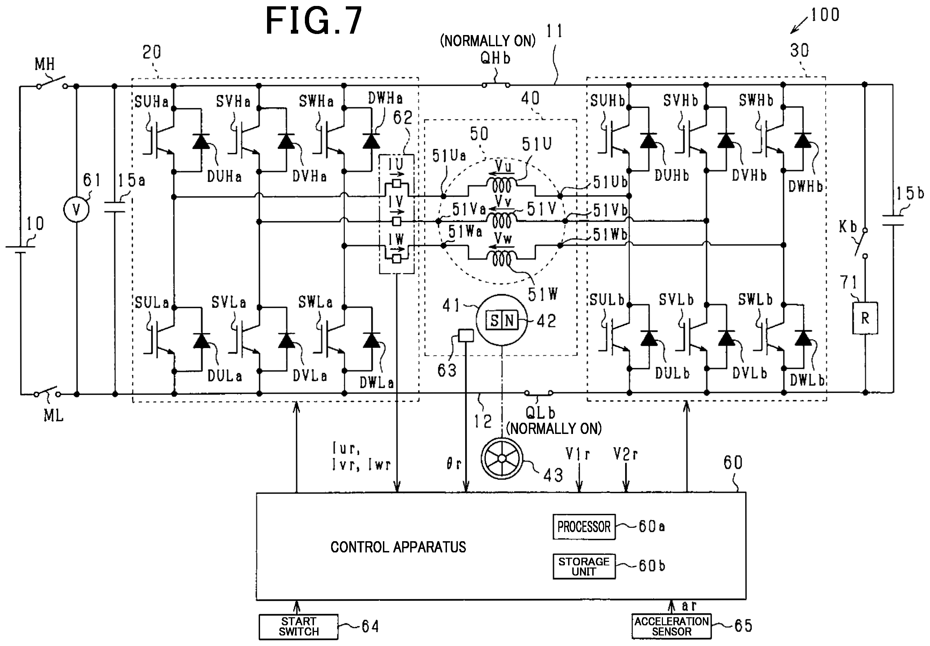

Hereinafter, a second embodiment will be described with reference to the drawings, focusing on the differences thereof from the first embodiment. In the second embodiment, as shown in FIG. 7, the electric power conversion system 100 includes a positive-electrode-side changeover switch QHb and a negative-electrode-side changeover switch QLb. Each of the changeover switches QHb and QLb is a normally-on switch. Moreover, each of the changeover switches QHb and QLb may be implemented by, for example, a normally-closed mechanical relay or a semiconductor switching element such as a depletion-type N-channel MOSFET. In addition, each of the changeover switches QHb and QLb is controlled by the switch control unit 83.

The electric power conversion system 100 also includes a discharge resistor 71 and a series switch Kb. The discharge resistor 71 is electrically connected in parallel with, of the first capacitor 15a and the second capacitor 15b, only the second capacitor 15b. Specifically, a first end of the discharge resistor 71 is electrically connected to the positive-electrode-side bus 11 at a location between the connection points of the positive-electrode-side bus 11 with the second upper-arm switches SUHb, SVHb and SWHb of the respective phases and the first end of the second capacitor 15b. A second end of the discharge resistor 71 is electrically connected to the negative-electrode-side bus 12 at a location between the connection points of the negative-electrode-side bus 12 with the second lower-arm switches SULb, SVLb and SWLb of the respective phases and the second end of the second capacitor 15b.

In the present embodiment, the changeover switches QHb and QLb together correspond to a "switch unit". Moreover, the buses 11 and 12, the first inverter 20, the second inverter 30, the rotating electric machine 40, the discharge resistor 71, the power supply switches MH and ML and the changeover switches QHb and QLb together constitute an "electric power conversion apparatus".

The series switch Kb is connected, on a higher-potential side of the discharge resistor 71, in series with the discharge resistor 71. Moreover, the series switch Kb is electrically connected with the positive-electrode-side bus 11 at the location between the connection points of the positive-electrode-side bus 11 with the second upper-arm switches SUHb, SVHb and SWHb of the respective phases and the first end of the second capacitor 15b. The series switch Kb is a normally-on switch. In addition, the series switch Kb is also controlled by the switch control unit 83.

In the present embodiment, when the changeover switches QHb and QLb and the series switch Kb are in an ON state and the power supply switches MH and ML are in an OFF state, electric current is allowed to flow through a closed circuit that includes the first capacitor 15a and the discharge resistor 71.

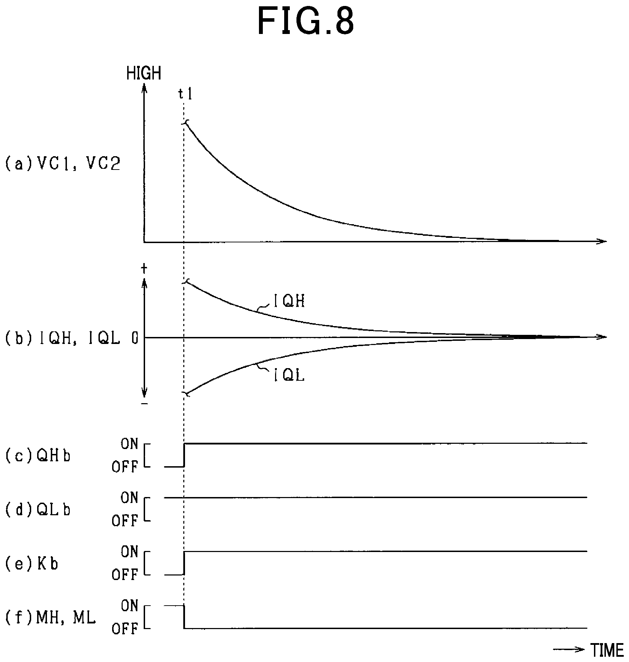

Next, with reference to FIG. 8, explanation will be given of operation of the electric power conversion system 100 when an abnormality has occurred therein. In this explanation, it is assumed that a collision of the vehicle occurs at a time instant t1 and thus the drive signals for the switches SUHa to SWLa and SUHb to SWLb that are controlled by the inverter control unit 80 and the control signals for the switches MH, ML, QHb, QLb and Kb that are controlled by the switch control unit 83 become unavailable.

In FIG. 8, (a) illustrates the temporal changes of the voltages VC1 and VC2 of the capacitors 15a and 15b; (b) illustrates the temporal changes of the electric currents IQH and IQL flowing respectively through the changeover switches QHb and QLb; (c) illustrates the ON/OFF state of the positive-electrode-side changeover switch QHb; (d) illustrates the ON/OFF state of the negative-electrode-side changeover switch QLb; (e) illustrates the ON/OFF state of the series switch Kb; and (f) illustrates the ON/OFF states of the power supply switches MH and ML. It should be noted that the signs of the electric currents IQH and IQL flowing respectively through the changeover switches QHb and QLb are defined, in the buses 11 and 12, to be positive when they flow from the first inverter 20 to the second inverter 30 and to be negative when they flow from the second inverter 30 to the first inverter 20.

Before the time instant t1, the selection unit 82 selects the Y drive control. In this case, the switch control unit 83 keeps the power supply switches MH and ML and the negative-electrode-side changeover switch QLb in an ON state while keeping the positive-electrode-side changeover switch QHb and the series switch Kb in an OFF state. At the same time, the inverter control unit 80 performs the switching control of the switches SUHa to SWLa of the first inverter 20 while keeping the second upper-arm switches SUHb, SVHb and SWHb of the respective phases in an ON state and keeping the second lower-arm switches SULb, SVLb and SWLb of the respective phases in an OFF state.

From the time instant t1 onward, the drive signals from the inverter control unit 80 become unavailable and thus the switches SUHa to SWLa and SUHb to SWLb are placed in an OFF state. Moreover, the control signals from the switch control unit 83 also become unavailable and thus the normally-off power supply switches MH and ML are placed in an OFF state. On the other hand, the normally-on changeover switches QHb and QLb and the normally-on series switch Kb are placed in an ON state. In this case, electric current flows through a closed circuit that includes the second capacitor 15b, the buses 11 and 12 and the discharge resistor 71. Consequently, the voltage VC2 of the second capacitor 15b is gradually lowered. Moreover, the discharge current of the first capacitor 15a is conducted through the changeover switches QHb and QLb; thus, electric current flows through a closed circuit that includes the first capacitor 15a, the buses 11 and 12, the changeover switches QHb and QLb and the discharge resistor 71. Consequently, the voltage VC1 of the first capacitor 15a is also gradually lowered. In addition, in the present embodiment, the first capacitor 15a corresponds to a "specific capacitor".

In the present embodiment, each of the changeover switches QHb and QLb is a normally-on switch. Consequently, when an abnormality has occurred in the electric power conversion system 100, both the first capacitor 15a and the second capacitor 15b can be discharged by the single discharge resistor 71. Thus, it becomes possible to suppress increase in the number of components of the electric power conversion system 100 as compared with a comparative example in which resistors are provided respectively corresponding to the capacitors 15a and 15b. As a result, it becomes possible to appropriately realize a configuration that allows both the first capacitor 15a and the second capacitor 15b to be discharged when an abnormality has occurred in the electric power conversion system 100.

When normally-on switches are employed as the changeover switches QHb and QLb, it is possible to allow both the first capacitor 15a and the second capacitor 15b to be discharged not only with the configuration shown in FIG. 7 which includes the discharge resistor 71, but also with the configuration shown in FIG. 1 which includes the discharge resistor 70. Consequently, the degree of freedom in designing the electric power conversion system 100 can be increased.

### [Third Embodiment]

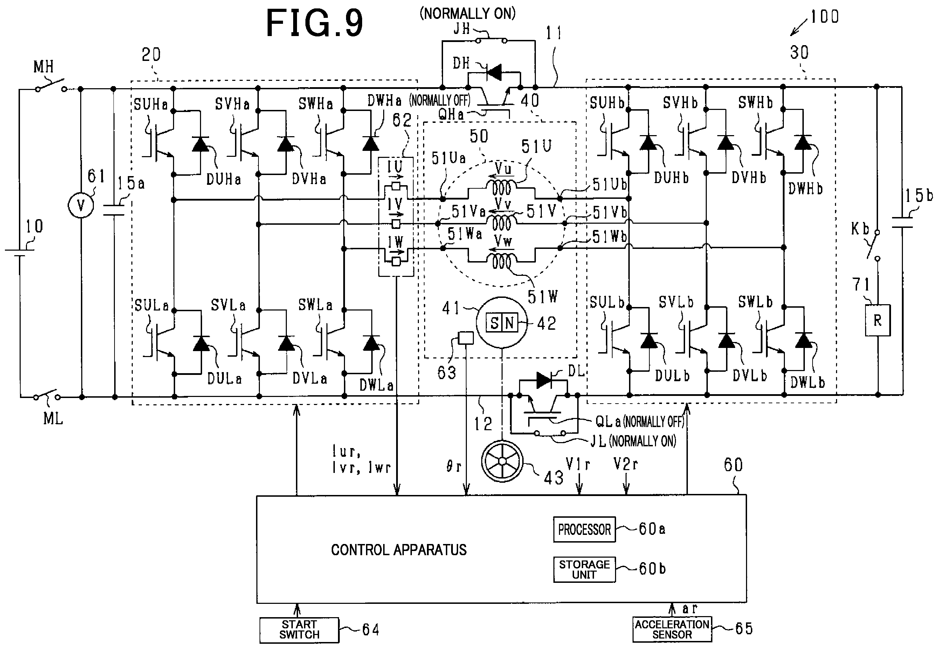

Hereinafter, a third embodiment will be described with reference to the drawings, focusing on the differences thereof from the first embodiment. In the third embodiment, as shown in FIG. 9, the electric power conversion system 100 includes a discharge resistor 71, a series switch Kb, a positive-electrode-side parallel switch JH and a negative-electrode-side parallel switch JL. The positive-electrode-side parallel switch JH is connected in parallel with the positive-electrode-side changeover switch QHa. The negative-electrode-side parallel switch JL is connected in parallel with the negative-electrode-side changeover switch QLa. Each of the parallel switches JH and JL is a normally-on switch. In addition, in the present embodiment, normally-closed mechanical relays are employed as the parallel switches JH and JL.

In the present embodiment, the changeover switches QHb and QLb and the parallel switches JH and JL together correspond to a "switch unit". Moreover, the buses 11 and 12, the first inverter 20, the second inverter 30, the rotating electric machine 40, the discharge resistor 71, the power supply switches MH and ML, the changeover switches QHb and QLb and the parallel switches JH and JL together constitute an "electric power conversion apparatus".

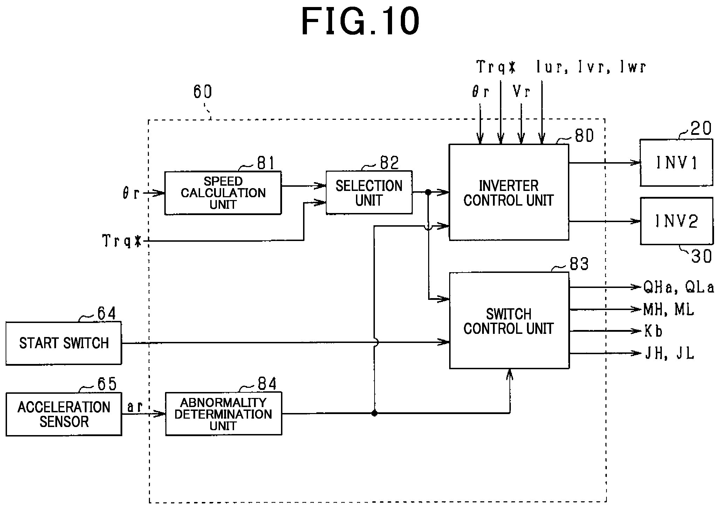

As shown in FIG. 10, the switch control unit 83 controls the changeover switches QHa and QLa, the power supply switches MH and ML, the series switch Kb and the parallel switches JH and JL. When it is determined that no abnormality has occurred in the electric power conversion system 100, the switch control unit 83 turns off the parallel switches JH and JL. On the other hand, when it is determined that an abnormality has occurred in the electric power conversion system 100, the switch control unit 83 turns on the parallel switches JH and JL.

In the present embodiment, when the parallel switches JH and JL and the series switch Kb are in an ON state and the power supply switches MH and ML and the changeover switches QHa and QLa are in an OFF state, electric current is allowed to flow through a closed circuit that includes the first capacitor 15a and the discharge resistor 71.

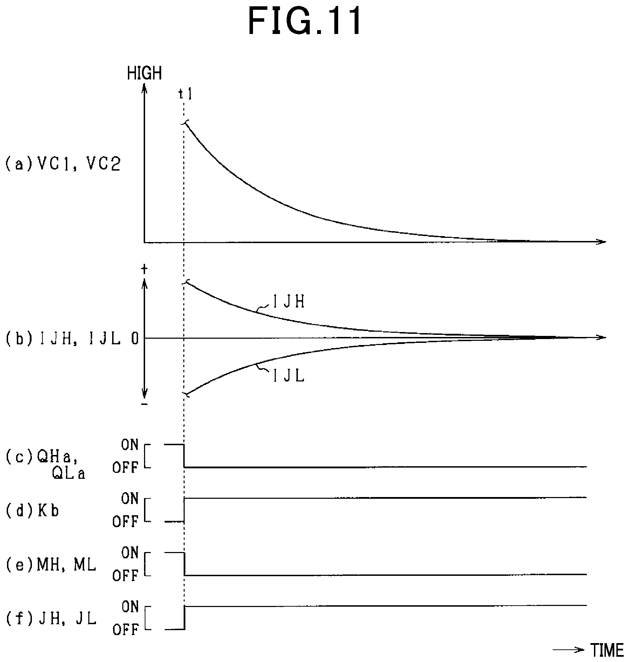

Next, with reference to FIG. 11, explanation will be given of operation of the electric power conversion system 100 when an abnormality has occurred therein. In this explanation, it is assumed that a collision of the vehicle occurs at a time instant t1 and thus the drive signals for the switches SUHa to SWLa and SUHb to SWLb that are controlled by the inverter control unit 80 and the control signals for the switches MH, ML, QHa, QLa, Kb, JH and JL that are controlled by the switch control unit 83 become unavailable.

In FIG. 11, (a) illustrates the temporal changes of the voltages VC1 and VC2 of the capacitors 15a and 15b; (b) illustrates the temporal changes of the electric currents IJH and IJL flowing respectively through the parallel switches JH and JL; (c) illustrates the ON/OFF states of the changeover switches QHa and QLa; (d) illustrates the ON/OFF state of the series switch Kb; (e) illustrates the ON/OFF states of the power supply switches MH and ML; and (f) illustrates the ON/OFF states of the parallel switches JH and JL. It should be noted that the signs of the electric currents IJH and IJL flowing respectively through the parallel switches JH and JL are defined, in the buses 11 and 12, to be positive when they flow from the first inverter 20 to the second inverter 30 and to be negative when they flow from the second inverter 30 to the first inverter 20.

Before the time instant t1, the selection unit 82 selects the H drive control. In this case, the switch control unit 83 keeps the power supply switches MH and ML and the changeover switches QHa and QLa in an ON state while keeping the series switch Kb and the parallel switches JH and JL in an OFF state. At the same time, the inverter control unit 80 performs the switching control of the switches SUHa to SWLa and SUHb to SWLb of the first and second inverters 20 and 30.

From the time instant t1 onward, the drive signals from the inverter control unit 80 become unavailable and thus the switches SUHa to SWLa and SUHb to SWLb are placed in an OFF state. Moreover, the control signals from the switch control unit 83 also become unavailable and thus the normally-off power supply switches MH and ML and the normally-off changeover switches QHa and QL are placed in an OFF state. On the other hand, the normally-on series switch Kb and the normally-on parallel switches JH and JL are placed in an ON state. In this case, electric current flows through a closed circuit that includes the second capacitor 15b, the buses 11 and 12 and the discharge resistor 71. Consequently, the voltage VC2 of the second capacitor 15b is gradually lowered. Moreover, the discharge current of the first capacitor 15a is conducted through the parallel switches JH and JL; thus, electric current flows through a closed circuit that includes the first capacitor 15a, the buses 11 and 12, the parallel switches JH and JL and the discharge resistor 71. Consequently, the voltage VC1 of the first capacitor 15a is also gradually lowered. In addition, in the present embodiment, the first capacitor 15a corresponds to a "specific capacitor".

In the present embodiment, the normally-on parallel switches JH and JL are connected respectively in parallel with the changeover switches QHa and QLa. Consequently, when an abnormality has occurred in the electric power conversion system 100, both the first capacitor 15a and the second capacitor 15b can be discharged by the single discharge resistor 71. Thus, it becomes possible to suppress increase in the number of components of the electric power conversion system 100 as compared with a comparative example in which resistors are provided respectively corresponding to the capacitors 15a and 15b. As a result, it becomes possible to appropriately realize a configuration that allows both the first capacitor 15a and the second capacitor 15b to be discharged when an abnormality has occurred in the electric power conversion system 100.

When normally-on switches are employed as the parallel switches JH and JL, it is possible to allow both the first capacitor 15a and the second capacitor 15b to be discharged not only with the configuration shown in FIG. 9 which includes the discharge resistor 71, but also with the configuration shown in FIG. 1 which includes the discharge resistor 70. Consequently, the degree of freedom in designing the electric power conversion system 100 can be increased.

When it is determined that no abnormality has occurred in the electric power conversion system 100, the switch control unit 83 controls the ON/OFF states of the changeover switches QHa and QLa and the parallel switches JH and JL with both the power supply switches MH and ML turned on. Specifically, the changeover switches QHa and QLa are controlled, based on the operating point of the rotating electric machine 40, to be in an ON state or an OFF state. Moreover, the parallel switches JH and JL are controlled to be in an OFF state. On the other hand, when it is determined that an abnormality has occurred in the electric power conversion system 100, the parallel switches JH and JL are placed in an ON state. That is, the changeover switches QHa and QLa are switches used for switching between the Y drive control and the H drive control, whereas the parallel switches JH and JL are switches used for discharging the capacitors 15a and 15b. In this case, it is possible to select switches suitable for the respective usages of the changeover switches QHa and QLa and the parallel switches JH and JL. As a result, it becomes possible to realize a configuration suitable for driving the rotating electric machine 40 by the Y drive control or the H drive control and for allowing both the first capacitor 15a and the second capacitor 15b to be discharged when an abnormality has occurred in the electric power conversion system 100.

For example, considering the fact that the changeover switches QHa and QLa are turned on and off more frequently than the parallel switches JH and JL, semiconductor switching elements having higher responsiveness to the control signals than mechanical relays may be employed as the changeover switches QHa and QLa. On the other hand, considering the fact that the parallel switches JH and JL are turned on and off less frequently than the changeover switches QHa and QLa, mechanical relays may be employed as the parallel switches JH and JL.

### [Other Embodiments]

The above-described embodiments may be modified and implemented as follows.

In the electric power conversion system 100, there may be provided a snubber capacitor for absorbing a surge voltage generated when electric current is interrupted by at least one of the switches SUHa to SWLa, SUHb to SWLb, QHa, QHb, QLa and QLb. The snubber capacitor is a capacitor having a capacitance lower than those of the first and second capacitors 15a and 15b that are smoothing capacitors. For example, in the electric power conversion system 100 in which the voltage of the battery 10 is higher than or equal to 300V and lower than or equal to 800V, a capacitor having a capacitance higher than or equal to 100nF and lower than or equal to 1µF may be employed as the snubber capacitor, whereas capacitors having a capacitance higher than or equal to 100µF, a capacitance higher than or equal to 150µF, a capacitance higher than or equal to 200µF, a capacitance higher than or equal to 250µF or a capacitance higher than or equal to 300µF may be employed as the first and second capacitors 15a and 15b.

In the above-described embodiments, when the power supply switches MH and ML are in an OFF state, the snubber capacitor may or may not be discharged, provided that the capacitors 15a and 15b are discharged by the discharge resistor. In other words, when the power supply switches MH and ML are in an OFF state, it is only necessary that the capacitors 15a and 15b, which are smoothing capacitors, be discharged.

In order to enable discharge of the first and second capacitors 15a and 15b, the resistance values of the discharge resistors 70 and 71 are determined in consideration of at least one of the following factors (1) to (4). For example, as the discharge resistors 70 and 71, resistors having a resistance value higher than or equal to 10Ω and lower than or equal to 10kΩ, resistors having a resistance value higher than or equal to 10Ω and lower than or equal to 100Ω, resistors having a resistance value higher than or equal to 100Ω and lower than or equal to 1kΩ, or resistors having a resistance value higher than or equal to 1kΩ and lower than or equal to 10kΩ may be employed.
(1) The voltage of the battery 10.
(2) The capacitances of the first and second capacitors 15a and 15b.
(3) The discharge times of the first and second capacitors 15a and 15b required for the electric power conversion system 100.
(4) The presence or absence of a series switch in the electric power conversion system 100.

Moreover, in the electric power conversion system 100, there may be provided an RC snubber circuit instead of the snubber capacitor.

The series switch may be connected in series with the discharge resistor on a lower-potential side of the discharge resistor instead of on the higher-potential side of the discharge resistor.

The series switch may be implemented by a normally-off switch instead of by a normally-on switch.

The electric power conversion system 100 may have no series switch provided therein.

In the first and third embodiments, each of the changeover switches may alternatively be implemented by an enhancement-type N-channel MOSFET or a normally-open mechanical relay.

In the third embodiment, each of the parallel switches may alternatively be implemented by a semiconductor switching element such as a depletion-type N-channel MOSFET.

In the first embodiment, the electric power conversion system 100 may include only one of the changeover switches QHa and QLa. In the second embodiment, the electric power conversion system 100 may include only one of the changeover switches QHb and QLb. In the third embodiment, the electric power conversion system 100 may include only one of the changeover switches QHa and QLa. In this case, a parallel switch may be connected in parallel with the single changeover switch provided in the electric power conversion system 100.

The electric power conversion system 100 may include only one of the power supply switches MH and ML.

The DC power source is not limited to a battery, but may alternatively be, for example, a fuel cell.

The number of phases of the rotating electric machine is not limited to three, but may alternatively be two, or four or more.

The semiconductor switching elements constituting the first inverter and the second inverter are not limited to IGBTs, but may alternatively be, for example, N-channel MOSFETs. In this case, each of the switches has its drain serving as a higher-potential-side terminal and its source serving as a lower-potential-side terminal. Moreover, in this case, each of the switches has a body diode.

The object in which the inverters, the rotating electric machine and the control apparatus are installed is not limited to a vehicle, but may alternatively be other mobile objects such as an aircraft or a ship. In the case of the object being an aircraft, the rotating electric machine serves as a flight power source of the aircraft. Otherwise, in the case of the object being a ship, the rotating electric machine serves as a navigation power source of the ship. Furthermore, the object in which the inverters, the rotating electric machine and the control apparatus are installed is not limited to mobile objects.

The control apparatuses and the control methods described in the present disclosure may be realized by a dedicated computer that includes a processor, which is programmed to perform one or more functions embodied by a computer program, and a memory. As an alternative, the control apparatuses and the control methods described in the present disclosure may be realized by a dedicated computer that includes a processor configured with one or more dedicated hardware logic circuits. As another alternative, the control apparatuses and the control methods described in the present disclosure may be realized by one or more dedicated computers configured with a combination of a processor programmed to perform one or more functions, a memory and a processor configured with one or more dedicated hardware logic circuits. In addition, the computer program may be stored as computer-executable instructions in a computer-readable non-transitory tangible storage medium.

While the present disclosure has been described pursuant to the above-described embodiments, it should be appreciated that the present disclosure is not limited to these embodiments and the structures. Instead, the present disclosure encompasses various modifications and changes within equivalent ranges. In addition, various combinations and modes are also included in the category and the scope of technical idea of the present disclosure.

## Claims

1. An electric power conversion apparatus comprising:
a rotating electric machine (40) having windings (51U, 51V, 51W) respectively of a plurality of phases;
a first inverter (20) having series connection units respectively of the plurality of phases, each of the series connection units consisting of a first upper-arm switch (SUHa, SVHa, SWHa) and a first lower-arm switch (SULa, SVLa, SWLa) that are connected in series with each other, each of the series connection units being connected in parallel with a DC power source (10) and a first capacitor (15a);
a second inverter (30) having series connection units respectively of the plurality of phases, each of the series connection units consisting of a second upper-arm switch (SUHb, SVHb, SWHb) and a second lower-arm switch (SULb, SVLb, SWLb) that are connected in series with each other, each of the series connection units being connected in parallel with a second capacitor (15b);
a positive-electrode-side bus (11) connecting, for each of the plurality of phases, a higher-potential-side terminal of the first upper-arm switch of the phase and a higher-potential-side terminal of the second upper-arm switch of the phase;
a negative-electrode-side bus (12) connecting, for each of the plurality of phases, a lower-potential-side terminal of the first lower-arm switch of the phase and a lower-potential-side terminal of the second lower-arm switch of the phase; and
a power supply switch (MH, ML) provided in a path connecting the first inverter and the DC power source,
wherein:
for each of the plurality of phases, both a lower-potential-side terminal of the first upper-arm switch of the phase and a higher-potential-side terminal of the first lower-arm switch of the phase are connected with a first end of the winding of the phase;
for each of the plurality of phases, both a lower-potential-side terminal of the second upper-arm switch of the phase and a higher-potential-side terminal of the second lower-arm switch of the phase are connected with a second end of the winding of the phase;
the electric power conversion apparatus further comprises
a discharge resistor (70, 71) connected in parallel with only one of the first and second capacitors, and
a switch unit (QHa, QHb, QLa, QLb, DH, DL, JH, JL) provided in a target bus that is at least one of the positive-electrode-side bus and the negative-electrode-side bus; and
the discharge resistor and the switch unit are provided in such a manner as to allow, when the power supply switch is in an OFF state, electric current to flow through a closed circuit that includes a specific capacitor and the discharge resistor, the specific capacitor being one of the first and second capacitors which is not connected in parallel with the discharge resistor.

2. The electric power conversion apparatus as set forth in Claim 1, wherein:
the discharge resistor is connected in parallel with, of the first and second capacitors, only the first capacitor;
the switch unit comprises a changeover switch and a diode (DH, DL) that is connected in parallel with the changeover switch; and
an anode and a cathode of the diode are oriented in such a manner as to allow discharge current of the second capacitor to flow through the discharge resistor.

3. An electric power conversion apparatus comprising:
a rotating electric machine (40) having windings (51U, 51V, 51W) respectively of a plurality of phases;
a first inverter (20) having series connection units respectively of the plurality of phases, each of the series connection units consisting of a first upper-arm switch (SUHa, SVHa, SWHa) and a first lower-arm switch (SULa, SVLa, SWLa) that are connected in series with each other, each of the series connection units being connected in parallel with a DC power source (10) and a first capacitor (15a);
a second inverter (30) having series connection units respectively of the plurality of phases, each of the series connection units consisting of a second upper-arm switch (SUHb, SVHb, SWHb) and a second lower-arm switch (SULb, SVLb, SWLb) that are connected in series with each other, each of the series connection units being connected in parallel with a second capacitor (15b);
a positive-electrode-side bus (11) connecting, for each of the plurality of phases, a higher-potential-side terminal of the first upper-arm switch of the phase and a higher-potential-side terminal of the second upper-arm switch of the phase;
a negative-electrode-side bus (12) connecting, for each of the plurality of phases, a lower-potential-side terminal of the first lower-arm switch of the phase and a lower-potential-side terminal of the second lower-arm switch of the phase; and
a power supply switch (MH, ML) provided in a path connecting the first inverter and the DC power source,
wherein:
for each of the plurality of phases, both a lower-potential-side terminal of the first upper-arm switch of the phase and a higher-potential-side terminal of the first lower-arm switch of the phase are connected with a first end of the winding of the phase;
for each of the plurality of phases, both a lower-potential-side terminal of the second upper-arm switch of the phase and a higher-potential-side terminal of the second lower-arm switch of the phase are connected with a second end of the winding of the phase;
the electric power conversion apparatus further comprises
a discharge resistor (70) connected in parallel with, of the first and second capacitors, only the first capacitor,
a changeover switch (QHa, QLa) provided in a target bus that is at least one of the positive-electrode-side bus and the negative-electrode-side bus, and
a diode (DH, DL) connected in parallel with the changeover switch; and
an anode and a cathode of the diode are oriented in such a manner as to allow discharge current of the second capacitor to flow through the discharge resistor.

4. The electric power conversion apparatus as set forth in Claim 1, wherein the switch unit comprises a normally-off changeover switch (QHa, QLa) and a normally-on parallel switch (JH, JL) that is connected in parallel with the normally-off changeover switch.

5. The electric power conversion apparatus as set forth in Claim 4, further comprising a switch control unit (83) configured to, when the power supply switch is in an ON state, control the parallel switch to be in an OFF state and control, based on an operating point of the rotating electric machine, the changeover switch to be in an ON state or an OFF state.

6. An electric power conversion apparatus comprising:
a rotating electric machine (40) having windings (51U, 51V, 51W) respectively of a plurality of phases;
a first inverter (20) having series connection units respectively of the plurality of phases, each of the series connection units consisting of a first upper-arm switch (SUHa, SVHa, SWHa) and a first lower-arm switch (SULa, SVLa, SWLa) that are connected in series with each other, each of the series connection units being connected in parallel with a DC power source (10) and a first capacitor (15a);
a second inverter (30) having series connection units respectively of the plurality of phases, each of the series connection units consisting of a second upper-arm switch (SUHb, SVHb, SWHb) and a second lower-arm switch (SULb, SVLb, SWLb) that are connected in series with each other, each of the series connection units being connected in parallel with a second capacitor (15b);
a positive-electrode-side bus (11) connecting, for each of the plurality of phases, a higher-potential-side terminal of the first upper-arm switch of the phase and a higher-potential-side terminal of the second upper-arm switch of the phase;
a negative-electrode-side bus (12) connecting, for each of the plurality of phases, a lower-potential-side terminal of the first lower-arm switch of the phase and a lower-potential-side terminal of the second lower-arm switch of the phase; and
a power supply switch (MH, ML) provided in a path connecting the first inverter and the DC power source,
wherein:
for each of the plurality of phases, both a lower-potential-side terminal of the first upper-arm switch of the phase and a higher-potential-side terminal of the first lower-arm switch of the phase are connected with a first end of the winding of the phase;
for each of the plurality of phases, both a lower-potential-side terminal of the second upper-arm switch of the phase and a higher-potential-side terminal of the second lower-arm switch of the phase are connected with a second end of the winding of the phase;
the electric power conversion apparatus further comprises
a discharge resistor (70, 71) connected in parallel with only one of the first and second capacitors,
a normally-off changeover switch (QHa, QLa) provided in a target bus that is at least one of the positive-electrode-side bus and the negative-electrode-side bus, and
a normally-on parallel switch (JH, JL) connected in parallel with the normally-off changeover switch.

7. The electric power conversion apparatus as set forth in Claim 1, wherein the switch unit comprises a normally-on switch (QHb, QLb).

8. An electric power conversion apparatus comprising:
a rotating electric machine (40) having windings (51U, 51V, 51W) respectively of a plurality of phases;
a first inverter (20) having series connection units respectively of the plurality of phases, each of the series connection units consisting of a first upper-arm switch (SUHa, SVHa, SWHa) and a first lower-arm switch (SULa, SVLa, SWLa) that are connected in series with each other, each of the series connection units being connected in parallel with a DC power source (10) and a first capacitor (15a);
a second inverter (30) having series connection units respectively of the plurality of phases, each of the series connection units consisting of a second upper-arm switch (SUHb, SVHb, SWHb) and a second lower-arm switch (SULb, SVLb, SWLb) that are connected in series with each other, each of the series connection units being connected in parallel with a second capacitor (15b);
a positive-electrode-side bus (11) connecting, for each of the plurality of phases, a higher-potential-side terminal of the first upper-arm switch of the phase and a higher-potential-side terminal of the second upper-arm switch of the phase;
a negative-electrode-side bus (12) connecting, for each of the plurality of phases, a lower-potential-side terminal of the first lower-arm switch of the phase and a lower-potential-side terminal of the second lower-arm switch of the phase; and
a power supply switch (MH, ML) provided in a path connecting the first inverter and the DC power source,
wherein:
for each of the plurality of phases, both a lower-potential-side terminal of the first upper-arm switch of the phase and a higher-potential-side terminal of the first lower-arm switch of the phase are connected with a first end of the winding of the phase;
for each of the plurality of phases, both a lower-potential-side terminal of the second upper-arm switch of the phase and a higher-potential-side terminal of the second lower-arm switch of the phase are connected with a second end of the winding of the phase;
the electric power conversion apparatus further comprises
a discharge resistor (70, 71) connected in parallel with only one of the first and second capacitors, and
a normally-on changeover switch (QHb, QLb) provided in a target bus that is at least one of the positive-electrode-side bus and the negative-electrode-side bus.

9. The electric power conversion apparatus as set forth in any one of Claims 1 to 8, further comprising a series switch (Ka, Kb) that is connected, on a higher-potential side or a lower-potential side of the discharge resistor, in series with the discharge resistor.

10. The electric power conversion apparatus as set forth in Claim 9, wherein the series switch is a normally-on switch.
